# EUROPEAN PATENT APPLICATION

(11) **EP 4 575 612 A1**
(43) Date of publication of application: **25.06.2025**
(21) Application number: 24201404.1
(22) Date of filing: 19.09.2024
(51) Int. Cl.: G02B 27/10, G01B 11/25, G02B 27/12, G02B 27/42, H04N 13/00

(54) **OPTICAL MODULE AND PROJECTOR**

(30) Priority: 21.12.2023 US 202318393609
(71) Applicant: Himax Technologies Limited, Tainan City 74148 (TW)
(72) Inventor: Tsai, Meng-Ko, 74148 Tainan City (TW); Cheng, Yu-Ching, 74148 Tainan City (TW)
(74) Representative: Straus, Alexander

(57) **Abstract**

An optical module (100) and a related projector (PRO) are disclosed. The optical module (100) includes a light source (110) and an optical structure (120). The light source (110) emits a light (L), and the optical structure (120) is disposed on the light source (110) for receiving the light (L). The optical structure (120) includes a first surface (S1) and a second surface (S2). The first surface (S1) is configured to deflect the light (L). The second surface (S2) has a plurality of microstructures (122) and is configured to project a predetermined pattern (PA) when the light (L) passing through the second surface (S2), and the second surface (S2) corresponds to the first surface (S1).

## Description

### Field of the Invention

The present invention relates to an optical module, and more particularly to an optical module including an optical structure with two surfaces having different functions and a related projector.

### Background of the Invention

Projectors for projecting patterns are widely used in three-dimensional (3D) sensing systems, wherein the patterns may be projected through optical elements. However, in the conventional projectors, in order to project patterns with large field of view (FOV), the optical elements need to have larger slopes in structure shapes at the same time, which requires difficult manufacturing processes for the optical elements. In addition, the optical elements with defective structures and/or the emitted light in zero order may cause the eye safety issue.

### Summary of the Invention

This in mind, the present invention aims at providing an optical module and a related projector, so as to solve the problems encountered by the conventional projectors. The provided optical module includes a first surface configured to deflect the light and a second surface configured to project a predetermined pattern, such that the optical module may have a large projected field of view and the size of the optical module may be smaller.

This is achieved by an optical module and a related projector according to the claims. The dependent claims pertain to corresponding further developments and improvements.

As will be seen more clearly from the detailed description following below, an optical module is provided by the present invention. The optical module includes a light source and an optical structure. The light source emits a light, and the optical structure is disposed on the light source for receiving the light. The optical structure includes a first surface and a second surface. The first surface is configured to deflect the light. The second surface has a plurality of microstructures and is configured to project a predetermined pattern when the light passing through the second surface, wherein the second surface corresponds to the first surface.

A projector is provided by the present invention. The projector includes at least two optical modules described above. The at least two optical modules are disposed adjacent to each other, and the predetermined patterns projected by the at least two optical modules combine to form a designed pattern.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof:
FIG. 1 is a schematic diagram of an optical module according to a first embodiment of the present invention;
FIG. 2 is a schematic diagram of an optical module according to a variant embodiment of the first embodiment of the present invention;
FIG. 3 is a schematic diagram of an optical module according to a second embodiment of the present invention;
FIG. 4 is a schematic diagram of a projector including two optical modules according to a further embodiment of the present invention; and
FIG. 5 is a schematic diagram of a designed pattern projected by the projector shown in FIG. 4.

### Detailed Description

The present invention may be understood by reference to the following detailed description, taken in conjunction with the drawings, which are described in further detail below. It is noted that, for purposes of illustrative clarity and ease of understanding by the readers, various drawings of the present invention show at least a portion of the optical module and/or the projector, and certain components in various drawings may not be drawn to scale. In addition, the number and dimension of each component shown in drawings are only illustrative and are not intended to limit the scope of the present invention.

Certain terms are used throughout the description and following claims to refer to particular components. As one skilled in the art will understand, equipment manufacturers may refer to a component by different names. This document does not intend to distinguish between components that differ in name but not function. In the following description and in the claims, the terms "include", "comprise" and "have" are used in an open-ended fashion, and thus should be interpreted to mean "include, but not limited to...". When the terms "include", "comprise" and/or "have" are used in the description of the present invention, the corresponding features, areas, steps, operations and/or components would be pointed to existence, but not limited to the existence or addition of one or a plurality of the corresponding or other features, areas, steps, operations, components and/or combinations thereof.

When an element or layer is referred to as being "on" or "connected to" another element or layer, it may be directly on or directly connected to the other element or layer, or intervening elements or layers may be presented (indirect condition). In contrast, when an element is referred to as being "directly on" or "directly connected to" another element or layer, there are no intervening elements or layers presented.

The directional terms mentioned in this document, such as "up", "down", "front", "back", "left", "right", etc., are only directions referring to the drawings. Therefore, the directional terms used are for illustration, not for limitation of the present invention.

The ordinal numbers used in the description and claims, such as "first", "second", "third", etc., are used to describe elements, but they do not mean and represent that the element(s) have any previous ordinal numbers, nor do they represent the order of one element and another element, or the order of manufacturing methods. The ordinal numbers are used only to clearly discriminate an element with a certain name from another element with the same name. The claims and the description may not use the same terms. Accordingly, in the following description, a first constituent element may be a second constituent element in a claim.

It should be noted that the technical features in different embodiments described in the following can be replaced, recombined, or mixed with one another to constitute another embodiment without departing from the spirit of the present invention.

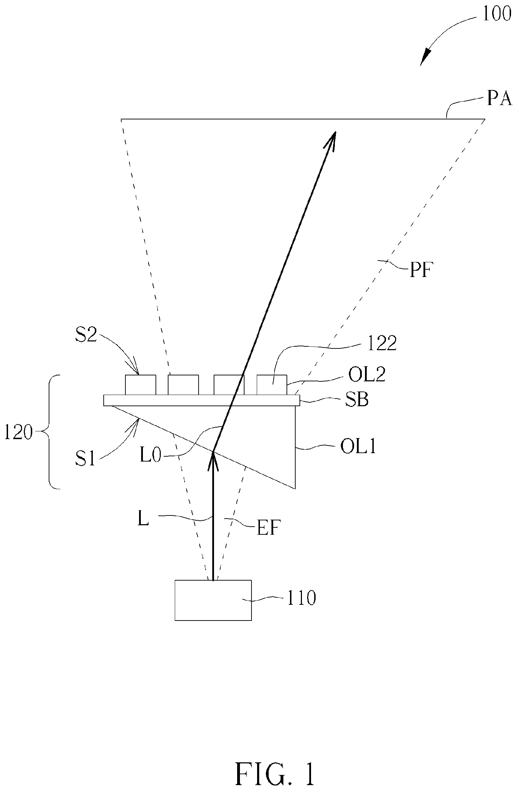

Please refer to FIG. 1, which is a schematic diagram of an optical module according to a first embodiment of the present invention. As shown in FIG. 1, an optical module 100 of the present invention includes a light source 110 and an optical structure 120. The light source 110 emits a light L, and the optical structure 120 is disposed on the light source 110 for receiving the light L. The light source 110 may include one of a laser diode (LD), a vertical-cavity surface-emitting laser (VCSEL), a light emitting diode (LED) and a photonic-crystal surface-emitting laser (PCSEL), or the light source 110 may include other suitable light emitting elements, not limited herein. The optical structure 120 includes a first surface S1 and a second surface S2 corresponding to the first surface S1. The first surface S1 is configured to deflect the light L, and the second surface S2 has a plurality of microstructures 122 configured to project a predetermined pattern PA when the deflected light of the light L passing through the second surface S2. For example, the first surface S1 may be composed of a first optical layer OL1 including deflection element for deflecting the light L, and the second surface S2 may be composed of a second optical layer OL2 having the microstructures 122. The first surface S1 may include a tilted plane, a blazed grating, a prism or a prism array. The microstructures 122 of second surface S2 may form a micro lens array (MLA), a diffractive optical element (DOE) or meta-surfaces. According to the embodiments of the present invention, one or more optical module(s) 100 may be applied to a projector, so as to project one or more predetermined pattern(s) PA. The projector may include a flood illuminator, a dot projector or combinations of the above, and the projector may be applied in a 3D sensing system or a vehicle sensing device, but not limited herein.

As shown in FIG 1, the first surface S1 may be disposed between the second surface S2 and the light source 110, and the light L passes through the second surface S2 after being deflected by the first surface S1. However, the position of the first surface S1 and the position of the second surface S2 are not limited to the above and may be exchanged with each other in other embodiments (not shown). That is to say, the second surface S2 may be disposed between the first surface S1 and the light source 110, and the light L is deflected by the first surface S1 after passing through the second surface S2.

According to the embodiment shown in FIG. 1, the optical structure 120 may include a substrate SB, and the first surface S1 and the second surface S2 are at two opposite sides of the substrate SB. Specifically, the first optical layer OL1 may be disposed on a side of the substrate SB facing the light source 110, i.e. disposed on the bottom surface of the substrate SB, and the second optical layer OL2 may be disposed on another side of the substrate SB facing away from the light source 110, i.e. disposed on the top surface of the substrate SB, so that the first surface S1 faces the light source 110, and the second surface S2 faces away from the light source 110. The light source 110 emits the light L, and the light L enters the first surface S1 and is deflected by the first optical layer OL1 of the first surface S1 as a deflected light L0. Then, the deflected light L0 passes through the substrate SB to enter the second optical layer OL2 of the second surface S2 and to be projected as the predetermined pattern PA. However, the structural design of the optical structure 120 is not limited to the above. In other embodiments, the second optical layer OL2 may be disposed on a side of the substrate SB facing the light source 110 to enable the second surface S2 to face the light source S2, and the first optical layer OL1 may be disposed on another side of the substrate SB facing away from the light source 110 to enable the first surface S1 to face away from the light source 110.

As shown in FIG. 1, the light source 110 emits the light L with an emitting field EF, which is represented by the dotted lines between the light source 110 and the first surface S1. The emitting field EF implies the original propagation field of the light L emitted from the light source 110. The dotted lines of the emitting field EF also depict the outmost lights of the original light L emitted from the light source 110. The traveling directions of the light L are changed after the light L passes through the first surface S1 and is deflected by the first surface S1, wherein the light L is deflected as the deflected light L0. After the deflected light L0 passes through the second surface S2, the propagation field or the light profile of the deflected light L0 becomes the projection field PF, which implies the final projection field of the optical module 100 or the applied projector. The traveling directions of the outmost lights of the deflected light L0, depicted by the dotted lines of the projection field PF, are changed to have a larger emergence angle with reference to the normal direction of the substrate SB respectively, so as to have a greater projection field PF. In other words, the first surface S1 changes the traveling path and/or direction of the light L emitted from the light source 110, and a large final field of view generated by the optical module 100 is obtained after the deflected light L0 passes through the second surface S2, which produces a large predetermined pattern PA.

Through the structural design described above, since the first surface S1 provides the deflection function and the light L emitted from the light source 110 can be offset, and the second surface S2 provides the greater propagation field or light profile of the deflected light L0, the optical module 100 may have a large projected field of view of the projected predetermined pattern PA. In another aspect, the second surface S2 configured for projecting the predetermined pattern PA but not required to deflect light can have a small size, and the design of the second surface S2 can be simplified.

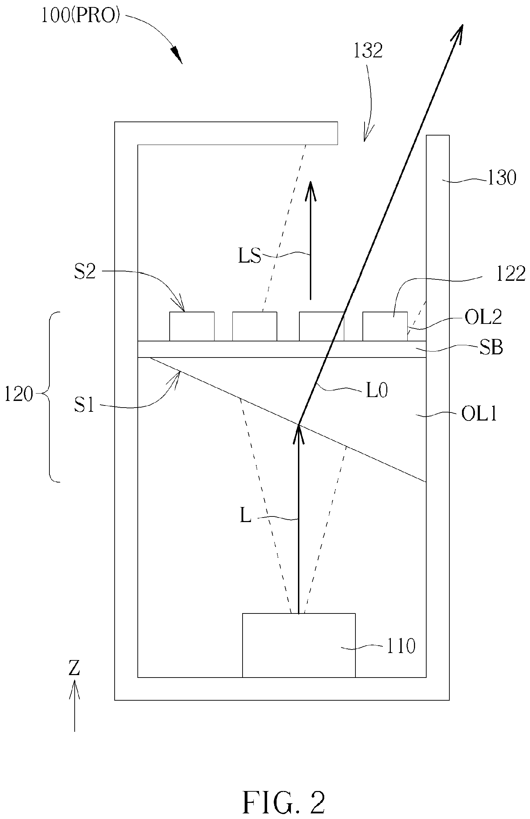

Please refer to FIG. 2, which is a schematic diagram of an optical module according to a variant embodiment of the first embodiment of the present invention. As shown in FIG. 2, an optical module 100 may further include a light-blocking element 130 surrounding the light source 110 and the optical structure 120. The optical module 100, together with the light-blocking element 130, may be applied to a projector PRO. The light-blocking element 130 has an opening 132, and the opening 132 allows the light L deflected by the first surface S1 to pass through. That is to say, the deflected light L0 (or the majority of the deflected light L0) is not blocked by the light-blocking element 130 and passes through the opening 132 to form the predetermined pattern PA. Furthermore, stray light may be blocked by the light-blocking element 130. Specifically, light in a traveling direction Z (i.e., light in the zero order) may be reduced since the light L is deflected, and a stray light LS with the traveling direction Z that is not deflected can be blocked by the light-blocking element 130, so that the eye safety issue generated by zero-order light may be reduced. According to the embodiment shown in FIG. 2, the direction Z may be parallel to an original traveling direction of the light L emitted from the light source 110, and the direction Z may be, for example, perpendicular to an upper surface or a lower surface of the substrate SB, but not limited herein.

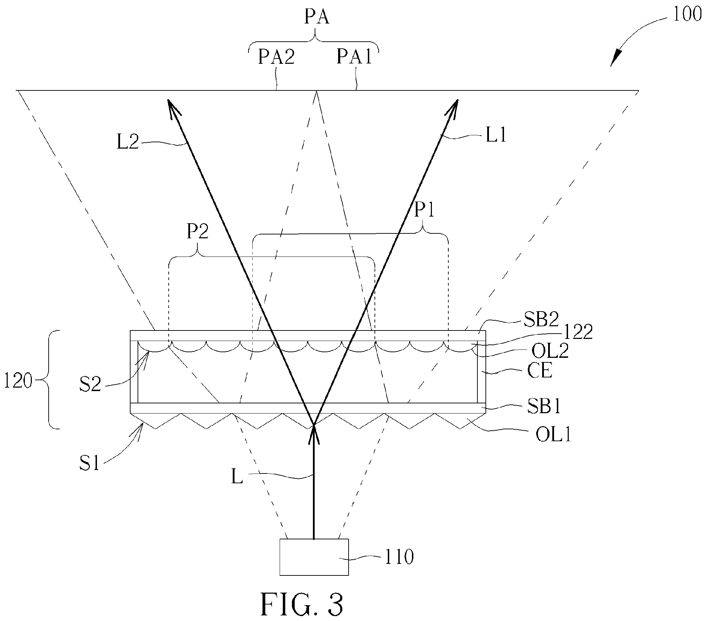

Please refer to FIG. 3, which is a schematic diagram of an optical module according to a second embodiment of the present invention. An optical module 100 of the second embodiment shown in FIG. 3 is different from the first embodiment in that, the optical structure 120 may include a first substrate SB1 and a second substrate SB2 corresponding to the first substrate SB1. The first surface S1 is at a side of the first substrate SB1, and the second surface S2 is at a side of the second substrate SB2. In some embodiments, the optical structure 120 may further include a connection element CE, and the first substrate SB1 is connected to the second substrate SB2 through the connection element CE, wherein the connection element CE may be, for example (but not limited to) a bonding pad, a glue or other suitable elements able to connect the first substrate SB1 and the second substrate SB2.

According to the embodiment shown in FIG. 3, the first optical layer OL1 may be disposed on a side of the first substrate SB1 facing the light source 110, and the second optical layer OL2 may be disposed on a side of the second substrate SB2 facing the light source 110, so that the first surface S1 faces the light source 110, and the second surface S2 faces the light source 110. However, the structural design of the optical structure 120 is not limited to the above. In the optical structure 120 of the optical module 100 of the present invention, the first optical layer OL1 may be disposed on a side of the first substrate SB1 facing the light source 110 or facing away from the light source 110, and the second optical layer OL2 may be disposed on a side of the second substrate SB2 facing the light source 110 or facing away from the light source 110.

As shown in FIG. 3, the light source 110 emits the light L, and the light L enters the first surface S1 and is deflected by the first optical layer OL1 of the first surface S1 as a first deflected light L1 and a second deflected light L2, wherein a traveling direction of the first deflected light L1 is different from a traveling direction of the second deflected light L2. For example, the light L may travel to different portions of the first surface S1 and deflected by the different portions of the first surface S1 as the first deflected light L1 and the second deflected light L2 respectively. The first deflected light L1 passes through a first portion P1 of the second surface S2 composed of the second optical layer OL2 to form a first sub-pattern PA1, and the second deflected light L2 passes through a second portion P2 of the second surface S2 composed of the second optical layer OL2 to form a second sub-pattern PA2, wherein the first sub-pattern PA1 and the second sub-pattern PA2 combine to form the predetermined pattern PA. The first portion P1 is not identical with the second portion P2, that is, the first portion P1 may be at least partially not overlapped with the second portion P2. In the embodiment shown in FIG. 3, the first portion P1 is partially overlapped with the second portion P2. In a variant embodiment, the first portion P1 may not be overlapped with the second portion P2 at all.

Through the structural design of the optical module 100 described above, the optical module 100 may have a large projected field of view, and the large predetermined pattern PA may be formed and projected by combining two or more small sub-patterns projected at the same time. In some embodiments, the sub-patterns (e.g., the first sub-pattern PA1 and the second sub-pattern PA2) may be projected through time-multiplexing method, but not at the same time, but not limited herein.

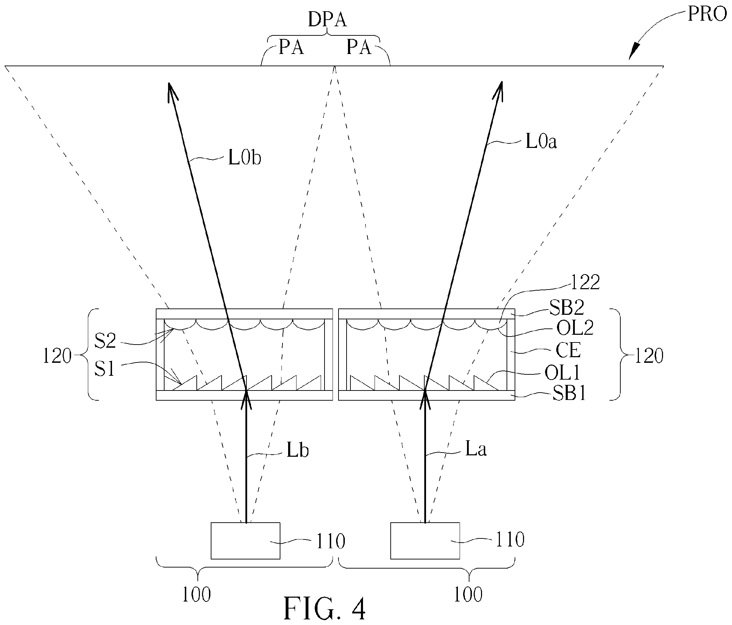

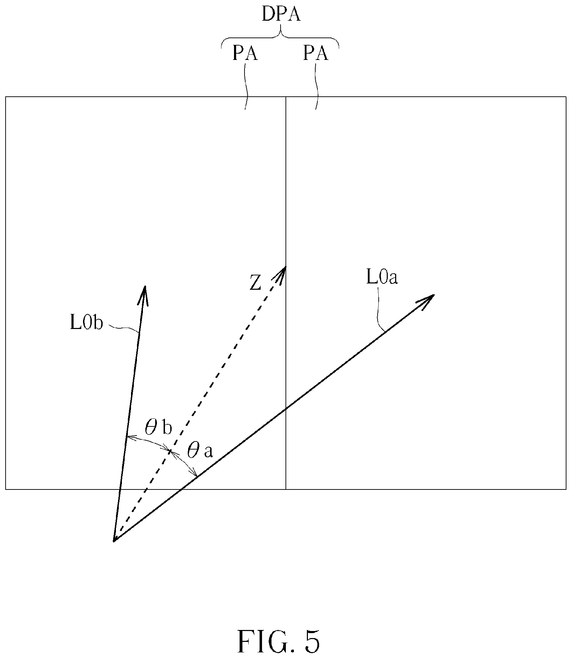

Please refer to FIG. 4 and FIG. 5. FIG. 4 is a schematic diagram of a projector including two optical modules according to a further embodiment of the present invention. FIG. 5 is a schematic diagram of a designed pattern projected by the projector shown in FIG. 4. As shown in FIG. 4 and FIG. 5, a plurality of optical modules 100 of various embodiments of the present invention may be disposed adjacent to each other to form a projector PRO. For example, a projector PRO may include two optical modules 100 disposed adjacent to each other, and the predetermined patterns PA projected by the two optical modules 100 combine to form a designed pattern DPA. According to the embodiment shown in FIG. 4 and FIG. 5, the optical structure 120 of each of the two optical modules 100 may include a first substrate SB1 and a second substrate SB2 corresponding to the first substrate SB1. The first optical layer OL1 may be disposed on a side of the first substrate SB1 facing away from the light source 110, and the second optical layer OL2 may be disposed on a side of the second substrate SB2 facing the light source 110, so that the first surface S1 faces away from the light source 110, and the second surface S2 faces the light source 110. In other words, the first optical layer OL1 and the second optical layer OL2 may be both disposed between the first substrate SB1 and the second substrate SB2, so that the first surface S1 and the second surface S2 are located between the first substrate SB1 and the second substrate SB2 individually. However, the structural design of the optical structures 120 in the two optical modules 100 is not limited to the above. In the optical structure 120 of each optical module 100 of the projector PRO of the present invention, the first optical layer OL1 may be disposed on a side of the first substrate SB1 facing the light source 110 or facing away from the light source 110, and the second optical layer OL2 may be disposed on a side of the second substrate SB2 facing the light source 110 or facing away from the light source 110.

As shown in FIG. 4 and FIG. 5, the light source 110 of one of the two optical modules 100 emits the light La, and the light La travels to the first surface S1 and is deflected by the first optical layer OL1 of the first surface S1 as a deflected light L0a. The deflected light L0a passes through the second optical layer OL2 of the second surface S2 to generate one predetermined pattern PA. In another aspect, the light source 110 of another one of the two optical modules 100 emits the light Lb, and the light Lb travels to the first surface S1 and deflected by the first optical layer OL1 of the first surface S1 as a deflected light L0b. The deflected light L0b passes through the second optical layer OL2 of the second surface S2 to generate another one predetermined pattern PA. The combination of the two predetermined patterns PA described above forms the designed pattern DPA. Accordingly, the designed pattern DPA can be projected by the projector PRO including the two optical modules 100.

A traveling direction of the deflected light L0a is different from a traveling direction of the deflected light L0b. For example, as shown in FIG. 5, the traveling direction of the deflected light L0a has an included angle θa with respect to the direction Z in the clockwise direction, while the traveling direction of the deflected light L0b has an included angle θb with respect to the direction Z in the counter-clockwise direction, wherein the included angle θa may be the same as or different from the included angle θb. The different traveling directions of the deflected light L0a and the deflected light L0b may be formed by, for example, different inclined directions of the two first surfaces S 1, but not limited herein. For example, as shown in FIG. 4, the inclined direction of the first surface S1 in the optical module 100 at the right side is different from the inclined direction of the first surface S1 in the optical module 100 at the left side.

Through the structural design of the projector PRO described above, the projector PRO may have a large projected field of view, and the large designed pattern DPA may be formed and projected by combining two or more small-sized predetermined patterns PA projected by different modules at the same time. In some embodiments, the predetermined patterns PA may be generated through time-multiplexing method, but not at the same time, but not limited herein.

From the above description, according to the optical modules and the related projectors of the embodiments of the present invention, through the structural design of the optical structure including a first surface configured to deflect the light and a second surface configured to project a predetermined pattern, the optical module may have a large projected field of view, and the eye safety issue may be reduced. In addition, through the different traveling directions of the deflected light, the large pattern may be formed and projected by combining two or more small-sized patterns. In short, the optical modules include two optical layers to form two different surfaces with different functions. One of the optical layers of the two surfaces provides deflection function, and the other one optical layer of the two surfaces provides the function of generating a predetermined projection pattern. According to the structural design, a small-sized optical module that can project a pattern with large field of view is provided. Furthermore, the two different optical layers with simple functions require simplified manufacture process, such that the manufacture cost may be lowered.

## Claims

1. An optical module (100), **characterized by** comprising:
a light source (110) emitting a light (L); and
an optical structure (120) disposed on the light source (110) for receiving the light (L), the optical structure (120) comprising:
a first surface (S1) configured to deflect the light (L); and
a second surface (S2) having a plurality of microstructures (122) configured to project a predetermined pattern (PA) when the light (L) passing through the second surface (S2), wherein the second surface (S2) corresponds to the first surface (S1).

2. The optical module (100) of claim 1, **characterized in that** the first surface (S1) is disposed between the second surface (S2) and the light source (110), and the light (L) passes through the second surface (S2) after deflected by the first surface (S1).

3. The optical module (100) of claim 1, **characterized in that** the second surface (S2) is disposed between the first surface (S1) and the light source (110), and the light (L) is deflected by the first surface (S1) after passing through the second surface (S2).

4. The optical module (100) of claim 1, **characterized in that** the optical structure (120) comprises a substrate (SB), and the first surface (S1) and the second surface (S2) are at two opposite sides of the substrate (SB).

5. The optical module (100) of claim 4, **characterized in that** the first surface (S1) faces the light source (110), and the second surface (S2) faces away from the light source (110).

6. The optical module (100) of claim 1, **characterized in that** the optical structure (120) comprises a first substrate (SB1) and a second substrate (SB2) corresponding to the first substrate (SB1), wherein the first surface (S1) is at a side of the first substrate (SB1), and the second surface (S2) is at a side of the second substrate (SB2).

7. The optical module (100) of claim 6, **characterized in that** the first surface (S1) faces the light source (110), and the second surface (S2) faces the light source (110).

8. The optical module (100) of claim 6, **characterized in that** the first surface (S1) faces away from the light source (110), the second surface (S2) faces the light source (110), and the first surface (S1) and the second surface (S2) are located between the first substrate (SB1) and the second substrate (SB2) individually.

9. The optical module (100) of any one of claims 1-8, **characterized in that** the light source (110) comprises one of a laser diode, a vertical-cavity surface-emitting laser, a light emitting diode and a photonic-crystal surface-emitting laser.

10. The optical module (100) of any one of claims 1-9, **characterized in that** the first surface (S1) comprises a tilted plane, a blazed grating, a prism or a prism array.

11. The optical module (100) of any one of claims 1-10, **characterized in that** the second surface (S2) comprises a micro lens array, a diffractive optical element or meta-surfaces.

12. The optical module (100) of any one of claims 1 and 3-11, **characterized in that** the light (L) is deflected by the first surface (S1) as a first deflected light (L1) and a second deflected light (L2), the first deflected light (L1) passes through a first portion (P1) of the second surface (S2) to form a first sub-pattern (PA1), and the second deflected light (L2) passes through a second portion (P2) of the second surface (S2) to form a second sub-pattern (PA2), wherein the first sub-pattern (PA1) and the second sub-pattern (PA2) combine to form the predetermined pattern (PA).

13. The optical module (100) of claim 12, **characterized in that** the first portion (P1) is not identical with the second portion (P2).

14. The optical module (100) of any one of claims 1-13, **characterized by** further comprising a light-blocking element (130) surrounding the light source (110) and the optical structure (120), wherein the light-blocking element (130) has an opening (132), and the opening (132) allows the light (L) deflected by the first surface (S1) to pass through.

15. A projector (PRO), **characterized by** comprising:
at least two optical modules (100) of any one of claims 1-13, wherein the at least two optical modules (100) are disposed adjacent to each other, and the predetermined patterns (PA) projected by the at least two optical modules (100) combine to form a designed pattern (DPA).
